# EUROPÄISCHE PATENTSCHRIFT

(11) **EP 3 350 550 B1**
(45) Veröffentlichungstag und Bekanntmachung des Hinweises auf die Patenterteilung: **13.04.2022**
(21) Anmeldenummer: 16765989.5
(22) Anmeldetag: 15.09.2016
(51) Int. Cl.: G01F 3/10, G01F 15/02, F04C 2/10, F04C 15/00

(54) **KÜHLBARE VORRICHTUNG ZUR MESSUNG VON DURCHFLUSSVORGÄNGEN VON FLUIDEN**
COOLABLE DEVICE FOR MEASURING THROUGH-FLOW PROCESSES OF FLUIDS
DISPOSITIF POUVANT ÊTRE REFROIDI SERVANT À MESURER DES PROCESSUS D'ÉCOULEMENT DE FLUIDES

(30) Priorität: 15.09.2015 AT 603152015
(43) Veröffentlichungstag der Anmeldung: 25.07.2018
(73) Patentinhaber: AVL List GmbH, 8020 Graz (AT)
(72) Erfinder: DERSCHMIDT, Otfried, 8020 Graz (AT); KAMMERSTETTER, DR., Heribert, 5020 Salzburg (AT); PROSS, Manfred, 8020 Graz (AT)
(74) Vertreter: terpatent Patentanwälte ter Smitten Eberlein-Van Hoof Rütten Daubert
(86) Internationale Anmeldenummer: PCT/EP2016/071753
(87) Internationale Veröffentlichungsnummer: WO 2017/046197

(56) Entgegenhaltungen:
- EP-A1- 1 334 816
- WO-A1-2004/036050
- CN-U- 201 739 172
- DE-A1- 10 117 373
- DE-A1-102006 033 028
- DE-B3- 10 331 228

## Beschreibung

Die Erfindung betrifft eine Vorrichtung zur Messung von Durchflussvorgängen von Fluiden mit einem Einlass, einem Auslass, einem Strömungsgehäuse, in dem das Fluid strömt, einem antreibbaren Verdrängerzähler, der im Strömungsgehäuse angeordnet ist, einer Umgehungsleitung, über die der Verdrängerzähler umgehbar ist, einem Druckdifferenzaufnehmer, der in der Umgehungsleitung angeordnet ist und im Strömungsgehäuse angeordnet ist, und einer Auswerte- und Steuereinheit, über die der antreibbare Verdrängerzähler in Abhängigkeit der am Druckdifferenzaufnehmer anliegenden Druckdifferenz regelbar ist.

Derartige Vorrichtungen sind seit vielen Jahren bekannt und werden beispielsweise zur Einspritzmengenmessung bei Verbrennungsmotoren verwendet.

Die ursprüngliche Version einer derartigen Vorrichtung zur Durchflussmessung wurde in der DE-AS 1 798 080 beschrieben. Dieses elektronisch gesteuerte Durchflussmessgerät weist eine Hauptleitung mit einem Einlass und einem Auslass auf, in der ein rotatorischer Verdränger in Form einer Zahnradpumpe angeordnet ist. Parallel zur Hauptleitung verläuft eine Umgehungsleitung, über die der rotatorische Verdränger umgehbar ist und in der ein als Druckdifferenzaufnehmer dienender Kolben in einer Messkammer angeordnet ist. Zur Bestimmung der Durchflussmenge wird die Auslenkung des Kolbens in der Messkammer mittels eines optischen Sensors gemessen. Die Drehzahl der Zahnradpumpe wird aufgrund dieses Signals über eine Auswerte- und Steuereinheit stetig nachgeregelt und zwar derart, dass der Kolben möglichst immer in seine Ausgangsposition zurückgeführt wird, so dass in der Umgehungsleitung lediglich kleine Strömungen entstehen. Aus der über einen Kodierer gemessenen Anzahl der Umdrehungen oder Teilumdrehungen der Zahnradpumpe sowie dem bekannten Fördervolumen der Zahnradpumpe bei einer Umdrehung wird so der Durchfluss innerhalb eines vorgegebenen Zeitintervalls berechnet.

Ein derartig aufgebautes Durchflussmengenmessgerät wird auch in der DE 103 31 228 B3 offenbart. Zur Bestimmung der genauen Einspritzmengenverläufe wird die Zahnradpumpe vor Beginn jeder Einspritzung jeweils auf eine konstante Drehzahl eingestellt, so dass anschließend die Bewegung des Kolbens gemessen wird und diese Auslenkung zur Bestimmung der Einspritzverläufe genutzt wird. In der Messkammer sind zusätzlich ein Drucksensor sowie ein Temperatursensor angeordnet, deren Messwerte zur Berechnung und Korrektur der Einspritzmengenverläufe ebenfalls der Recheneinheit zugeführt werden.

Des Weiteren ist aus der DE 1 773 608 A ein Durchflussmesser bekannt, bei dem ein rotatorischer Verdrängerzähler zur Messung der Durchflussmenge viskoser Medien auch bei hohen Temperaturen dient. Während der Durchflussmesser über einen Heizmantel auf hoher Temperatur gehalten wird, ist die Antriebseinheit mit Kühlrippen versehen. Die Differenzdruckmessung erfolgt über eine Übertragungsflüssigkeit, auf die der Druck der Messflüssigkeit über Membranen übertragen wird. Zusätzlich sind zwischen dem Verdrängerzähler und dessen Antrieb Kühlmittel durchströmte Rohre zur thermischen Trennung des Verdrängerzählers zu seinem Antrieb angeordnet, welche auch in Kontakt zum Druckdifferenzaufnehmer stehen.

Auch ist aus der DE 10 2006 033 028 A1 ein Extruder bekannt, an den eine Zahnradpumpe angeschlossen ist, wobei entweder am Extruder oder an der Zahnradpumpe ein Kühlkanal ausgebildet ist, der entweder zum Heizen oder zum Kühlen dienen kann. Der Kühlkanal, der auch als Aufwärmkanal genutzt werden kann, dient dazu, eine gewünschte Viskosität der thermoplastischen Massen einstellen zu können. Die Kühlkanäle dienen somit ausschließlich zur Einstellung einer Temperatur des geförderten Fluids.

Zusätzlich wird in der WO 2004/036050 A1 eine Drehkolbenpumpe offenbart, deren Verdrängerkammer durch einen Deckel verschlossen wird, in dem eine Nut ausgebildet ist, durch die Kühlmittel fließen kann und die durch eine zusätzliche Platte zwischen der Verdrängerkammer und dem Deckel verschlossen wird.

Es sind jedoch keine Lösungen bekannt, wie einerseits eine Überhitzung elektronischer Komponenten und andererseits ein unerwünschtes Aufwärmen der Gehäuse durch das gegebenenfalls heiße Messfluid verhindert werden kann, um möglichst konstante Temperaturwerte sowohl im Bereich des Verdrängerzählers als auch im Bereich des Druckdifferenzaufnehmers während der Messungen zu schaffen und alle Komponenten vor Überhitzung zu schützen, wenn Durchflussvorgänge von Messfluiden mit Temperaturen von bis zu 200°C gemessen werden.

Es stellt sich somit die Aufgabe, eine Vorrichtung zur Messung von Durchflussvorgängen von Fluiden zur Verfügung zu stellen, mit der die Durchflussverläufe auch bei hohen Temperaturen des Messfluids zuverlässig über einen langen Zeitraum messen zu können, ohne einen Ausfall entweder der elektrischen Komponenten oder Ungenauigkeiten bei der Messung durch schwankende Temperaturen befürchten zu müssen.

Diese Aufgabe wird durch eine Vorrichtung zur Messung von Durchflussvorgängen von Fluiden mit den Merkmalen des Anspruchs 1 gelöst.

Dadurch, im Strömungsgehäuse ein von Kühlmittel durchströmbarer Kühlkanal ausgebildet ist, von dem sich ein Abschnitt um eine Verdrängerkammer des Verdrängerzählers erstreckt der als Nut auf einer zu einer Antriebseinheit weisenden Oberfläche des Strömungsgehäuses ausgebildet ist und durch die Antriebseinheit verschlossen ist, kann direkt am vom Messfluid durchströmten Bereich aktiv Wärme entzogen werden, um auch bei Messfluiden mit hohen Temperaturen, eine aktive Kühlung vornehmen zu können, wodurch sowohl die Messkammer selbst auf konstanten Temperaturen gehalten werden kann, als auch die Wärmestrahlung zu den umliegenden empfindlichen elektronischen Komponenten deutlich verringert wird. Dies führt zu besseren Messergebnissen und einer längeren Lebensdauer der Messanlage. Die Wärme des Messfluids kann unmittelbar an der Stelle abgeführt werden, an der einerseits die Messung vorgenommen wird und andererseits die Verbindung zu thermisch empfindlichen elektrischen Komponenten, wie der Antriebseinheit vorliegt. So wird die thermische Belastung der Antriebseinheit verringert, da diese direkt in Kontakt mit dem Kühlmittel steht und zusätzlich thermisch abgeschirmt wird, so dass auch eine Wärmestrahlung von der Verdrängerkammer zur Antriebseinheit verringert wird. Eine thermische Überlastung wird so zuverlässig vermieden.

In einer besonders bevorzugten Ausführung der Erfindung weist die Vorrichtung zumindest ein Wärmerohr auf, über welches Wärme aus Wärme erzeugenden Bauteilen der Vorrichtung an das durch den Kühlkanal strömende Kühlmittel übertragbar ist. Derartige Wärmerohre, auch "heatpipes" genannt, sind bekannt. Sie weisen ein hermetisch gekapseltes Volumen in Form eines Rohres auf, welches mit einem Arbeitsmedium, das das Volumen des Rohres zu einem kleinen Teil in flüssigem, zum größeren in dampfförmigem Zustand ausfüllt. Darin befinden sich je eine Wärmeübertragungsfläche für die als Wärmequelle dienenden elektronischen Bauteile und das als Wärmesenke dienende vom Kühlmittel durchströmte Strömungsgehäuse. Durch den Wärmeeintrag der elektronischen Komponenten beginnt das Arbeitsmedium im Wärmerohr zu verdampfen, wodurch der Druck im Dampfraum lokal erhöht, was zu einem geringen Druckgefälle innerhalb des Wärmerohrs führt. Der entstandene Dampf strömt deswegen in Richtung des kühleren Strömungsgehäuses, wo der Dampf wieder kondensiert und somit die zuvor aufgenommene Wärme an das Kühlmittel im Strömungsgehäuse abgibt. Das nun flüssige Arbeitsmedium kehrt durch Kapillarkräfte wieder zurück in Richtung der elektronischen Komponenten. Die Kühlkanäle im Strömungsgehäuse dienen somit zur Wärmeabfuhr sowohl der Wärme aus den elektrischen Komponenten, wie Steuerplatinen, Auswerte- und Steuerelektroniken oder Wicklungen an Elektromotoren als auch zur Wärmeabfuhr aus dem durch die Messflüssigkeit erwärmten Gehäuse.

Dabei ist es besonders vorteilhaft, wenn die Antriebseinheit ein Gehäuse einer Magnetkupplung oder eines Elektromotors aufweist, über die die Nut verschlossen ist. Auf diese Weise wird das Gehäuse thermisch unmittelbar an das gekühlte Strömungsgehäuse angeschlossen, wodurch die an den Statorwicklungen des Elektromotors oder in der Magnetkupplung entstehende Wärme über das Kühlmittel abgeführt werden kann.

In einer besonders bevorzugten Ausbildung erstreckt sich ein erstes Wärmerohr entlang der Antriebseinheit zum Strömungsgehäuse, insbesondere entlang des Stators des Elektromotors und entlang einer Steuerplatine, wodurch die an der Antriebseinheit entstehende Wärme sowohl von deren Elektronikeinheit als auch vom Elektromotor, die beide als Wärmequelle des Wärmerohrs dienen, über das Wärmerohr mit hoher Effizienz abgeführt werden kann.

Hierzu weist das Strömungsgehäuse eine Aufnahmeöffnung auf, in die das Wärmerohr ragt, so dass das Wärmerohr im Strömungsgehäuse direkt an den Kühlkanal herangeführt werden kann, so dass eine geringe Temperatur der Wärmesenke sichergestellt wird. Zusätzlich wird die Montage des Wärmerohres vereinfacht, welches einfach eingesteckt wird.

Des Weiteren ist es vorteilhaft, wenn sich mindestens ein Wärmerohr von einem ersten Strömungsgehäuseteil des Strömungsgehäuses, in dem der Verdrängerzähler angeordnet ist, zu einer Platine mit einem Sensor zur Detektion der Position des Druckdifferenzaufnehmers erstreckt. Auf diese Weise wird auch Wärme, die an der Platine im Bereich des Positionssensors entsteht, abgeführt und so dessen Messergebnisse Temperatureinflüssen entzogen.

In einer vorteilhaften Ausführungsform ist die Platine in einem zweiten Strömungsgehäuseteil des Strömungsgehäuses angeordnet, in dem der Druckdifferenzaufnehmer aufgenommen ist und welches am ersten Strömungsgehäuseteil befestigt ist. Dieses zweite Strömungsgehäuseteil, in dem der Druckdifferenzaufnehmer angeordnet ist, ist entsprechend ebenfalls mit dem gekühlten ersten Strömungsgehäuseteil thermisch gekoppelt.

Vorzugsweise weisen das erste Strömungsgehäuseteil und das zweite Strömungsgehäuseteil jeweils eine erste und eine zweite Aufnahmeöffnung auf, wobei sich ein erstes Wärmerohr von der ersten Aufnahmeöffnung des ersten Strömungsgehäuseteils in die erste Aufnahmeöffnung des zweiten Strömungsgehäuseteils erstreckt und ein zweites Wärmerohr sich von der zweiten Aufnahmeöffnung des ersten Strömungsgehäuseteils in die zweite Aufnahmeöffnung des zweiten Strömungsgehäuseteils erstreckt. Zusätzliche Befestigungen der Wärmerohre sind entsprechend nicht notwendig. Die gesamte Montage erfolgt durch einfaches Einstecken. So wird auf einfache Art eine Anbindung der als Wärmequelle dienenden Platine zum als Wärmesenke dienenden ersten Strömungsgehäuseteil geschaffen und entsprechend eine ausreichende Wärmeabfuhr auch aus dem Bereich des Druckdifferenzaufnehmers auch bei der Verwendung heißer Messfluide sichergestellt.

Eine besonders gute Wärmeabfuhr und ein geringer benötigter Bauraum wird erreicht, wenn das mindestens eine Wärmerohr sich parallel zur Platine erstreckt, so dass Wärme über die gesamte Fläche der Platine abgezogen werden kann.

Eine besonders wirkungsvolle Kühlung bei gleichzeitig vereinfachter Montage und Herstellung ergibt, sich, wenn an einer ersten Seite des ersten Strömungsgehäuseteils ein Einlass und ein Auslass des Kühlkanals ausgebildet sind, die in einen Einlasskanalabschnitt und einen Auslasskanalabschnitt münden, die sich jeweils vom Einlass und vom Auslass in Richtung der gegenüberliegenden Seite des ersten Strömungsgehäuseteils erstrecken und über zumindest einen Querkanalabschnitt miteinander verbunden sind. Bei dieser Ausführung wird das gesamte Strömungsgehäuseteil gleichmäßig durch das Kühlmittel gekühlt und kann so vollständig als Wärmesenke dienen.

In einer hierzu weiterführenden vorteilhaften Ausbildung erstreckt sich ein erster Querkanalabschnitt vom Einlasskanalabschnitt zum die Verdrängerkammer umgebenden Abschnitt des Kühlkanals und der die Verdrängerkammer umgebende Abschnitt des Kühlkanals erstreckt sich bis in einen zweiten Querkanalabschnitt, der im Auslasskanalabschnitt mündet. So wird eine Zwangsumströmung der Verdrängerkammer sichergestellt und gleichzeitig auch eine zwangsweise gleichmäßige Durchströmung des übrigen Strömungsgehäuseteils.

Dabei ist es besonders bevorzugt, wenn die durch den Kühlkanal strömende Kühlmittelmenge regelbar ist, was beispielsweise durch vorgeschaltete Klappen oder Ventile oder regelbare Umwälzpumpen erfolgen kann. Diese Regelung des Kühlmittelstroms ermöglicht eine genaue Einstellung der Temperaturen in der Verdrängerkammer oder in der Messkammer des Druckdifferenzaufnehmers. Des Weiteren kann eine Regelung dieser Kühlmittelmenge in Abhängigkeit der Betriebstemperaturen des Messmediums erfolgen.

Es wird somit eine Vorrichtung zur Messung von Durchflussvorgängen von Fluiden zur Verfügung gestellt, die einfach montierbar und bezüglich der Temperaturen regelbar ist, so dass ein Überhitzen wärmeempfindlicher Bauteile zuverlässig vermeiden wird. Dies führt zu einer längeren Lebensdauer der Vorrichtung und vor allem zu Messergebnissen, die über die gesamte Lebensdauer sehr exakt sind, so dass über einen langen Zeitraum auch zeitlich aufgelöste Durchflussvorgänge hochgenau und unabhängig von der Temperatur des Messmediums gemessen werden können. Dabei ist die Vorrichtung einfach herstellbar und montierbar, so dass trotz der Erhöhung der Lebensdauer keine signifikanten zusätzlichen Kosten anfallen.

Die erfindungsgemäße Vorrichtung zur Messung von Durchflussvorgängen von Fluiden wird im Folgenden anhand eines in den Figuren dargestellten, nicht einschränkenden Ausführungsbeispiels beschrieben.
Figur 1 zeigt eine schematische Darstellung einer erfindungsgemäßen Vorrichtung zur Messung von Durchflussvorgängen von Fluiden.
Figur 2 zeigt eine perspektivische Außenansicht einer erfindungsgemäßen Vorrichtung.
Figur 3 zeigt einen Ausschnitt einer perspektivischen Außenansicht der erfindungsgemäßen Vorrichtung mit transparent dargestelltem ersten Strömungsgehäuseteil und nicht montierter Haube.
Figur 4 zeigt einen Ausschnitt einer perspektivischen Kopfansicht mit transparent dargestelltem zweitem Strömungsgehäuseteil.
Figur 5 zeigt eine perspektivische Ansicht des ersten Strömungsgehäuseteils aus Richtung der Antriebseinheit.
Figur 6 zeigt eine perspektivische geschnittene Ansicht des ersten Strömungsgehäuseteils aus Richtung des zweiten Strömungsgehäuseteils.

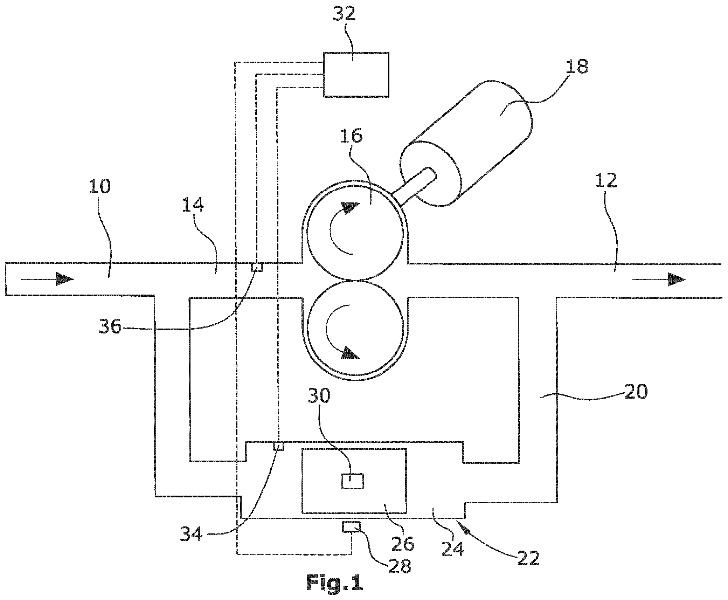

Die in der Figur 1 dargestellte Vorrichtung zur Messung von Durchflussvorgängen von Fluiden weist einen Einlass 10 und einen Auslass 12 auf, die durch eine Hauptleitung 14 miteinander verbunden sind, in der ein rotatorischer Verdrängerzähler 16, der als Zahnradpumpe ausgebildet ist, angeordnet ist.

Über den Einlass 10 strömt ein zu messendes Fluid, insbesondere ein Kraftstoff, aus einer einen Durchfluss erzeugenden Vorrichtung, insbesondere einer Kraftstoffhochdruckpumpe, und zumindest einem Einspritzventil, in die Hauptleitung 14 und wird über den Verdrängerzähler 16 gefördert, der über eine Antriebseinheit 18 angetrieben werden kann.

Von der Hauptleitung 14 zweigt zwischen dem Einlass 10 und dem rotatorischen Verdrängerzähler 16 eine Umgehungsleitung 20 ab, die stromabwärts des rotatorischen Verdrängerzählers 16 zwischen diesem und dem Auslass 12 wieder in die Hauptleitung 14 mündet und entsprechend wie die Hauptleitung 14 fluidisch mit dem Einlass 10 und dem Auslass 12 verbunden ist. In dieser Umgehungsleitung 20 ist ein translatorischer Druckdifferenzaufnehmer 22 angeordnet, der aus einer Messkammer 24 und einem in der Messkammer 24 axial frei verschiebbar angeordneten Kolben 26 besteht, der das gleiche spezifische Gewicht wie das Messfluid, also der Kraftstoff aufweist und wie die Messkammer 24 zylindrisch geformt ist; die Messkammer 24 weist somit einen Innendurchmesser auf, der im Wesentlichen dem Außendurchmesser des Kolbens 26 entspricht.

Durch die Förderung des Kraftstoffs mittels des Verdrängerzählers 16 sowie durch das Einspritzen des Kraftstoffs in den Einlass 10 und durch die fluidische Verbindung des Einlasses 10 zu einer Frontseite des Kolbens 26 sowie des Auslasses 12 zur Rückseite des Kolbens 26 über die Umgehungsleitung 20 kann eine Druckdifferenz zwischen der Frontseite und der Rückseite des Kolbens 26 entstehen, die zu einer Auslenkung des Kolbens 26 aus seiner Ruhestellung führt. Entsprechend ist die Auslenkung des Kolbens 26 ein Maß für die anliegende Druckdifferenz.

Um diese Auslenkung korrekt ermitteln zu können, ist an der Messkammer 24 ein magnetoresistiver Sensor 28 angeordnet, der in Wirkverbindung mit einem im Kolben 26 befestigten Magneten 30 steht und in dem durch die Auslenkung des Kolbens 26 eine von der Größe der Auslenkung des Kolbens 26 abhängige Spannung erzeugt wird. Diese ist abhängig von dem auf den Sensor 28 wirkenden magnetischen Feld des Magneten 30, welches sich durch dessen Bewegung sowohl bezüglich der Richtung als auch bezüglich der Größe der Feldlinien ändert.

Der Sensor 28 ist mit einer Auswerte- und Steuereinheit 32 verbunden, welche die Werte dieses Sensors 28 verarbeitet und entsprechende Steuersignale dem Antriebsmotor 18 übermittelt, der möglichst derart angesteuert wird, dass sich der Kolben 26 immer in einer definierten Ausgangsstellung befindet, der Verdrängerzähler 16 also die aufgrund des eingespritzten Fluides am Kolben 26 entstehende Druckdifferenz durch Förderung ständig etwa ausgleicht. Hierzu wird die Auslenkung des Kolbens 26 beziehungsweise das durch ihn verdrängte Volumen in der Messkammer 24 mittels einer Übertragungsfunktion in ein gewünschtes Fördervolumen des Verdrängerzählers 16 beziehungsweise eine Drehzahl des Antriebsmotors 18 umgerechnet und der Antriebsmotor 18 entsprechend bestromt.

In der Messkammer 24 ist zusätzlich ein Drucksensor 34 angeordnet, der kontinuierlich die in diesem Bereich auftretenden Drücke misst. Des Weiteren ist in der Hauptleitung 14 ein Temperatursensor 36 zur Messung der aktuellen Fluidtemperatur angeordnet. Beide Messwerte werden wiederum der Auswerte- und Steuereinheit 32 zugeführt, um Änderungen der Dichte bei der Berechnung berücksichtigen zu können.

Der Ablauf der Messungen erfolgt derart, dass bei der Berechnung eines zu ermittelnden Gesamtdurchflusses in der Auswerte- und Steuereinheit 32 sowohl ein durch die Bewegung beziehungsweise Stellung des Kolbens 26 und das damit verdrängte Volumen in der Messkammer 24 entstehender Durchfluss in der Umgehungsleitung 20 als auch ein tatsächlicher Durchfluss des Verdrängerzählers 16 in einem festgelegten Zeitintervall berücksichtigt werden und beide Durchflüsse zur Ermittlung des Gesamtdurchflusses miteinander addiert werden.

Die Ermittlung des Durchflusses am Kolben 26 erfolgt beispielsweise, indem in der Auswerte- und Steuereinheit 32, die mit dem Sensor 28 verbunden ist, die Auslenkung des Kolbens 26 differenziert wird und anschließend mit der Grundfläche des Kolbens 26 multipliziert wird, so dass sich ein Volumenstrom in der Umgehungsleitung 20 in diesem Zeitintervall ergibt.

Der Durchfluss durch den Verdrängerzähler 16 und somit in der Hauptleitung 14 kann entweder aus den ermittelten Steuerdaten zur Regelung des Verdrängerzählers 16 bestimmt werden oder über die Drehzahl berechnet werden, wenn diese direkt über optische Kodierer oder magnetoresistive Sensoren gemessen wird.

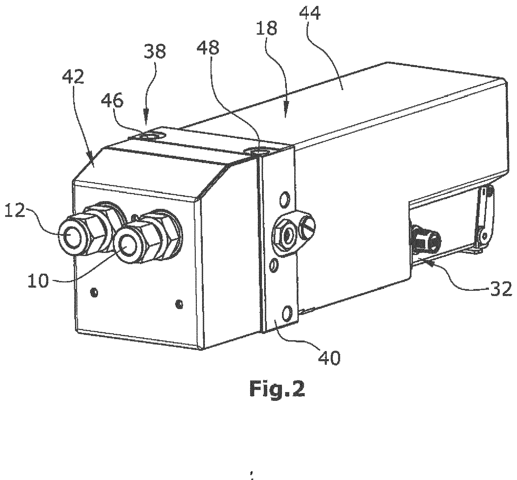

In der Figur 2 ist eine Außenansicht einer derartigen erfindungsgemäßen Vorrichtung zur Messung von zeitlich aufgelösten Durchflussvorgängen dargestellt. Diese weist ein Strömungsgehäuse 38 auf, welches zweiteilig hergestellt ist, wobei im ersten Strömungsgehäuseteil 40 der Verdrängerzähler 16 angeordnet ist und im zweiten Strömungsgehäuseteil 42 der Druckdifferenzaufnehmer 22 sowie der Einlass 10 und der Auslass 12 ausgebildet sind. Die Antriebseinheit 18 des Verdrängerzählers 14 sowie die Auswerte- und Steuereinheit 32 sind innerhalb einer Haube 44 angeordnet, die ebenso wie das zweite Strömungsgehäuseteil 42 am ersten Strömungsgehäuseteil 40 befestigt ist. Des Weiteren sind an einer Oberseite des ersten Strömungsgehäuseteils 40 zwei Öffnungen ersichtlich, die erfindungsgemäß als Kühlmitteleinlass 46 und Kühlmittelauslass 48 eines von Kühlmittel durchströmten Kühlkanals 50 dienen, der im ersten Strömungsgehäuseteil 40 ausgebildet ist.

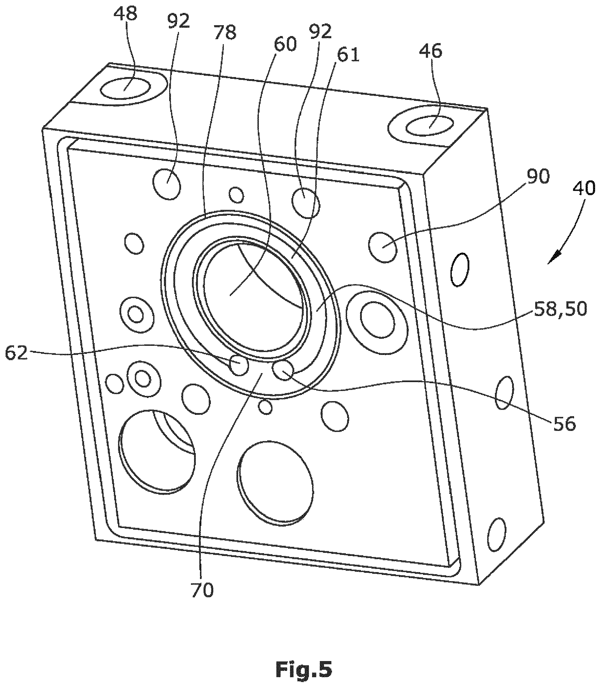

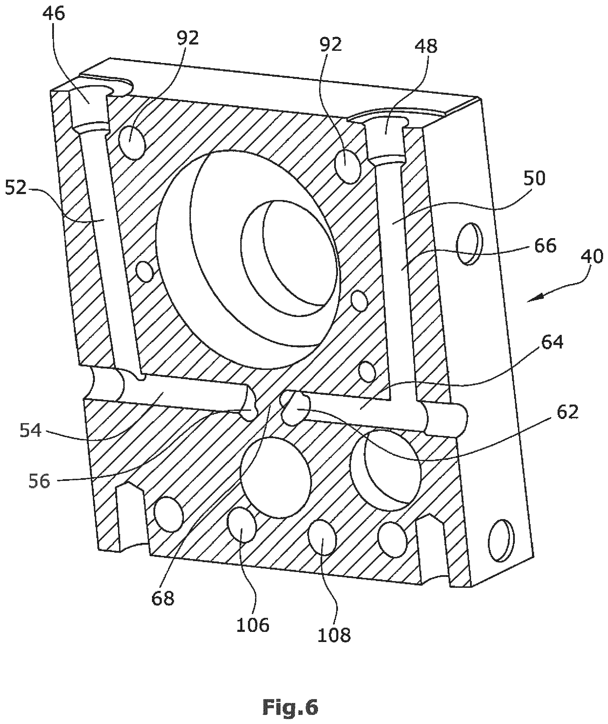

Der Verlauf dieses Kühlkanals 50 ist in den Figuren 5 und 6 zu erkennen, in denen das erste Strömungsgehäuseteil 40 dargestellt ist. Vom Kühlmitteleinlass 46 strömt Kühlmittel in einen senkrecht zur gegenüberliegenden Seite des Strömungsgehäuseteils 40 verlaufenden Einlasskanalabschnitt 52, der in einen senkrecht hierzu verlaufenden ersten Querkanalabschnitt 54 mündet. Dieser ist über eine Verbindungsbohrung 56 mit einem Abschnitt 58 des Kühlkanals 50 verbunden, der sich um eine Verdrängerkammer 60 erstreckt, in der der Verdrängerzähler 16 angeordnet ist. Dieser Abschnitt 58 befindet sich auf einer zur Antriebseinheit 18 weisenden Seite des ersten Strömungsgehäuseteils 40 und ist als offene Nut 61 ausgebildet. Das Kühlmittel strömt anschließend über eine zweite Verbindungsbohrung 62 in einen zweiten Querkanalabschnitt 64, der wiederum in einen senkrecht zum Kühlmittelauslass 48 führenden Auslasskanalabschnitt 66 mündet. Beide Querkanalabschnitte 54, 64, sind als Bohrungen ausgebildet, und werden nach außen durch nicht dargestellte Stopfen verschlossen. Zwischen den beiden Querkanalabschnitten 54, 64 befindet sich ein Unterbrecherbereich 68, der eine Zwangsdurchströmung des um die Verdrängerkammer 60 verlaufenden Abschnitts 58 erzwingt. Um diese Zwangsdurchströmung vom Kühlmitteleinlass 46 zum Kühlmittelauslass 48 sicherzustellen und Totgebiete zu vermeiden weist auch dieser Abschnitt 58 einen kurzen Unterbrecherbereich 70 auf.

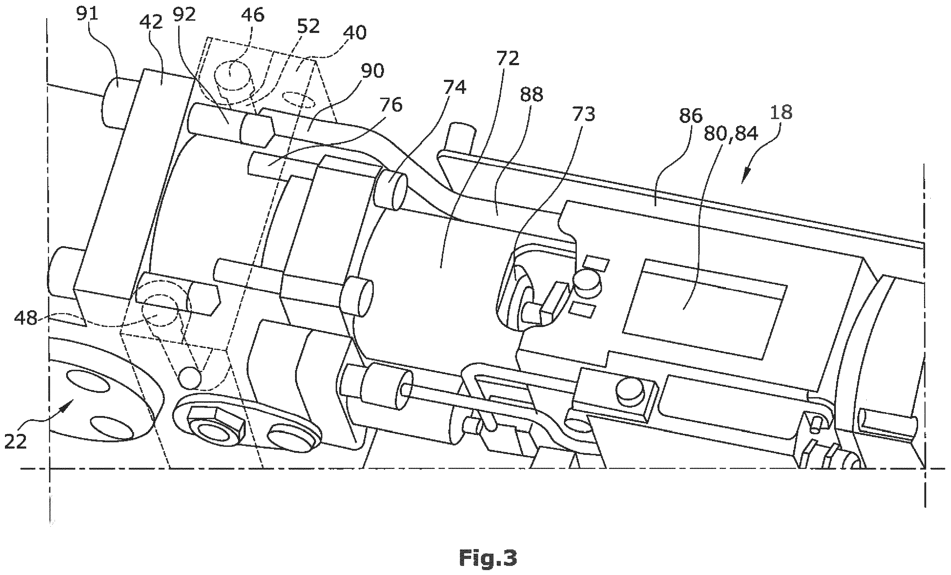

Die in der Figur 5 ausgebildete und als Abschnitt 58 des Kühlkanals 50 dienende Nut 61 wird, wie in Figur 3 ersichtlich ist, durch ein Gehäuse 72 einer Magnetkupplung 73 verschlossen, welches mittels Schrauben 74, die in Gewindelöcher 76 des ersten Strömungsgehäuseteils 40 eingeschraubt werden, am ersten Strömungsgehäuseteil 40 unter Zwischenlage einer den Abschnitt 58 des Kühlkanals 50 vollständig umgebenden, in einer weiteren Nut 78 des Strömungsgehäuseteils 40 angeordneten Dichtung befestigt.

Das Gehäuse 72 umgibt die Magnetkupplung 73, deren Außenrotor über einen Elektromotor 80 angetrieben wird, über den ein Verdrängerrad 82, des als Innenzahnradpumpe ausgebildeten Verdrängerzählers 16 angetrieben wird. Ein bewickelter Stator 84 dieses Elektromotors 80 gibt im Betrieb ebenso wie eine sich parallel zum Elektromotor 80 erstreckende Steuerplatine 86 zur Ansteuerung des Elektromotors 80, auf der unter anderem Wärme erzeugende Leistungstransistoren angeordnet sind, Wärme an die Umgebung ab. Um ein daraus folgendes Aufheizen der Antriebseinheit 18 im Inneren der Haube 44 zu verhindern, erstreckt sich zwischen der Steuerplatine 86 und dem Elektromotor 80 in Erstreckungsrichtung der Steuerplatine 86 und des Elektromotors 80 ein erstes Wärmerohr 88, welches als "heatpipe" ausgeführt ist, bis in unmittelbare Nähe des Einlasskanalabschnitts 52 des Kühlkanals 50 im ersten Strömungsgehäuseteil 40. Hierzu ist am Strömungsgehäuseteil 40, welches als Wärmesenke für das Wärmerohr 88 dient, eine erste Aufnahmeöffnung 90 ausgebildet, in die das Wärmerohr 88 ragt. Die durch die Antriebseinheit 18 und insbesondere die Steuerplatine 86 und den Stator 84 des Elektromotors 80 erzeugt Wärme wird über das Wärmerohr 88 durch dessen extrem geringen Wärmewiderstand schnell zum Kühlmittel und über das Kühlmittel nach außen abgeführt, so dass ein Aufheizen der Antriebseinheit 18 zuverlässig und unmittelbar vom Ort der Entstehung abgeführt wird.

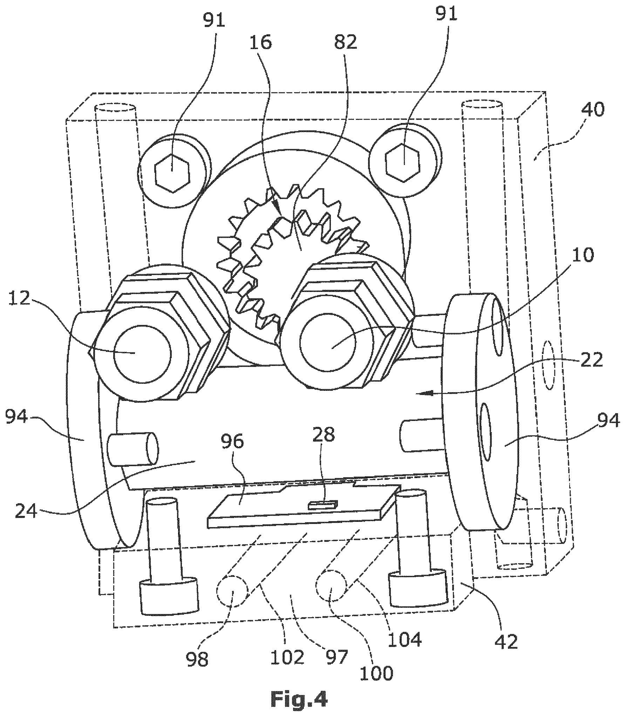

In der Figur 4 ist die Verbindung zwischen dem ersten und dem zweiten Strömungsgehäuseteil 40, 42 über Schrauben 91 zu sehen, die durch das zweite Strömungsgehäuseteil 42 gesteckt und in Gewindelöcher 92 des ersten Strömungsgehäuseteils 40 geschraubt werden. Am transparent dargestellten zweiten Strömungsgehäuseteil 42 ist der Einlass 10 und der Auslass 12 ausgebildet, die über nicht näher dargestellte Strömungswege in bekannter Weise mit dem Verdrängerzähler 16 und der ebenfalls zu erkennenden Messkammer 24, welche beidseitig durch Flansche 94 verschlossen ist, verbunden sind. Unterhalb der Messkammer 24 ist eine Platine 96 angeordnet, die auf einem unteren Deckelteil 97 des zweiten Strömungsgehäuseteils 42 befestigt ist. Auf dieser Platine 96 ist der Sensor 28 angeordnet, der mit dem Magneten 30 im Kolben 26 des Druckdifferenzaufnehmers 22 korrespondiert.

Um zum Sensor 28 gelangende Wärme aus der Messkammer 24 aufgrund der Temperatur des Messfluids oder durch Elektronikteile der Platine 96 entstehende Wärme, die die Funktion des Sensors 28 beeinträchtigen könnte zuverlässig ableiten zu können, besteht einerseits die vollflächige Befestigung des zweiten Strömungsgehäuseteils 42 am ersten, gekühlten Strömungsgehäuseteil 40 und andererseits eine Abführung der Wärme über zwei weitere parallel verlaufende Wärmerohre 98, 100, die ebenfalls als "heatpipes" ausgeführt sind. Beide Wärmerohre 98, 100 verlaufen parallel in Erstreckungsrichtung der Platine 96 von entsprechend orientierten Aufnahmeöffnungen 102, 104 im zweiten Strömungsgehäuseteil 42 in entsprechend geformte, gegenüberliegend zu den ersten beiden Aufnahmeöffnungen 102, 104 angeordnete Aufnahmeöffnungen 106, 108 im ersten Strömungsgehäuseteil 40. Entsprechend wird auch hier die in der Messkammer 24 vorhandene und an der Platine 96 entstehende Wärme durch eine Verdampfung der Flüssigkeit in den "heatpipes" 98, 100 in Richtung des als Wärmesenke dienenden ersten Strömungsgehäuseteils 40 und über das im Kühlkanal strömende Kühlmittel abgeführt, woraufhin die Flüssigkeit in den Wärmerohren 98, 100 wieder verdampft und durch die Kapillarwirkung wieder in Richtung des zweiten Strömungsgehäuseteils 42 transportiert wird. Entsprechend können stetig große Wärmemengen aus dem zweiten Strömungsgehäuseteil 42 zum ersten Strömungsgehäuseteil 40 transportiert werden und von dort über das Kühlmittel der Kühlkanäle abgeführt werden. Um dabei eine möglichst konstante, jedoch in Abhängigkeit der Temperatur der Messflüssigkeit unterschiedliche Temperatur im Bereich der Messkammer 24 und des Verdrängerzählers 16 einstellen zu können ist der Volumenstrom des Kühlmittels im Kühlkanal 50 einstellbar, was entweder über eine regelbare Pumpe erfolgen kann oder über entsprechende Regelglieder in Form von Klappen oder Ventilen.

Eine derartige Vorrichtung zur Messung von Durchflussvorgängen von Fluiden arbeitet hochgenau und liefert kontinuierlich zeitlich aufgelöste Messergebnisse. Dies wird aufgrund der guten Wärmeabfuhr sowohl aus den Gehäuseteilen als auch von der Elektronik für Temperaturen der Messflüssigkeit von bis zu 200°C sichergestellt, da wärmeempfindliche Bauteile durch die vorhandene Kühlung durch die "heatpipes" und den Kühlkanal zuverlässig vor einer Überhitzung geschützt werden. Entsprechend steigt die Lebensdauer der Elektronik und des Elektromotors. Trotz der vorhandenen Kühlung bleiben die Herstellung und die Montage einfach. Insbesondere werden keine langen Kühlschlangen benötigt, an denen Leckagen auftreten können. Stattdessen sind die Kühlkanäle als einfach herstellbare Bohrungen und Nuten in nur einem Gehäuseteil ausgebildet, welches entsprechend bearbeitet werden muss. Dennoch können durch die Verwendung der Wärmerohre große Wärmemengen zuverlässig und vom Ort ihrer Entstehung abgeführt werden. Auch das Gehäuse selbst, welches durch die Messflüssigkeit erhitzt wird sowie die daran vorhandenen Dichtung werden entsprechend geschützt, da ihre Wärme abgeführt wird.

Es sollte deutlich sein, dass die Erfindung nicht auf das beschriebene Ausführungsbeispiel begrenzt ist, sondern verschiedene Modifikationen innerhalb des Schutzbereichs des Hauptanspruchs möglich sind. Auch können beispielsweise zusätzliche "heatpipes" zur Kühlung der Auswerteeinheit der Vorrichtung in entsprechender Weise angeordnet werden.

## Patentansprüche

1. Vorrichtung zur Messung von Durchflussvorgängen von Fluiden mit
einem Einlass (10),
einem Auslass (12),
einem Strömungsgehäuse (38), in dem das Fluid strömt,
einem antreibbaren Verdrängerzähler (16), der im Strömungsgehäuse (38) angeordnet ist,
einer Umgehungsleitung (20), über die der Verdrängerzähler (16) umgehbar ist,
einem Druckdifferenzaufnehmer (22), der in der Umgehungsleitung (20) angeordnet ist und im Strömungsgehäuse (38) angeordnet ist, und einer Auswerte- und Steuereinheit (32), über die der antreibbare Verdrängerzähler (16) in Abhängigkeit der am Druckdifferenzaufnehmer (22) anliegenden Druckdifferenz regelbar ist,
**dadurch gekennzeichnet, dass**
im Strömungsgehäuse (38) ein von Kühlmittel durchströmbarer Kühlkanal (50) ausgebildet ist, von dem sich ein Abschnitt (58) um eine Verdrängerkammer (60) des Verdrängerzählers (16) erstreckt der als Nut (61) auf einer zu einer Antriebseinheit (18) weisenden Oberfläche des Strömungsgehäuses (38) ausgebildet ist und durch die Antriebseinheit (18) verschlossen ist.

2. Vorrichtung zur Messung von Durchflussvorgängen von Fluiden nach Anspruch 1,
**dadurch gekennzeichnet, dass**
die Vorrichtung zumindest ein Wärmerohr (88, 98, 100) aufweist, über welches Wärme aus Wärme erzeugenden Bauteilen (32, 84, 86, 96) der Vorrichtung an das durch den Kühlkanal (50) strömende Kühlmittel übertragbar ist.

3. Vorrichtung zur Messung von Durchflussvorgängen von Fluiden nach Anspruch 1 oder 2,
**dadurch gekennzeichnet, dass**
die Antriebseinheit (18) ein Gehäuse (72) einer Magnetkupplung (73) oder eines Elektromotors (80) aufweist, über die die Nut (61) verschlossen ist.

4. Vorrichtung zur Messung von Durchflussvorgängen von Fluiden nach einem der vorhergehenden Ansprüche 2 oder 3,
**dadurch gekennzeichnet, dass**
sich ein Wärmerohr (88) entlang der Antriebseinheit (18) zum Strömungsgehäuse (38) erstreckt.

5. Vorrichtung zur Messung von Durchflussvorgängen von Fluiden nach Anspruch 4,
**dadurch gekennzeichnet, dass**
sich das Wärmerohr (88) zumindest entlang des Stators (84) des Elektromotors (80) und entlang einer Steuerplatine (86) erstreckt.

6. Vorrichtung zur Messung von Durchflussvorgängen von Fluiden nach einem der Ansprüche 4 oder 5,
**dadurch gekennzeichnet, dass**
das Strömungsgehäuse (38) eine Aufnahmeöffnung (90) aufweist, in die das Wärmerohr (88) ragt.

7. Vorrichtung zur Messung von Durchflussvorgängen von Fluiden nach einem der vorhergehenden Ansprüche 2 bis 6,
**dadurch gekennzeichnet, dass**
sich mindestens ein Wärmerohr (98) von einem ersten Strömungsgehäuseteil (40) des Strömungsgehäuses (38), in dem der Verdrängerzähler (16) angeordnet ist, zu einer Platine (96) mit einem Sensor (28) zur Detektion der Position des Druckdifferenzaufnehmers (22) erstreckt.

8. Vorrichtung zur Messung von Durchflussvorgängen von Fluiden nach Anspruch 7,
**dadurch gekennzeichnet, dass**
die Platine (96) in einem zweiten Strömungsgehäuseteil (42) des Strömungsgehäuses (38) angeordnet ist, in dem der Druckdifferenzaufnehmer (22) aufgenommen ist und welches am ersten Strömungsgehäuseteil (40) befestigt ist.

9. Vorrichtung zur Messung von Durchflussvorgängen von Fluiden nach Anspruch 8,
**dadurch gekennzeichnet, dass**
das erste Strömungsgehäuseteil (40) und das zweite Strömungsgehäuseteil (42) jeweils eine erste und eine zweite Aufnahmeöffnung (102, 104, 106, 108) aufweisen, wobei sich ein Wärmerohr (98) von der ersten Aufnahmeöffnung (106) des ersten Strömungsgehäuseteils (40) in die erste Aufnahmeöffnung (102) des zweiten Strömungsgehäuseteils (42) erstreckt und ein weiteres Wärmerohr (100) sich von der zweiten Aufnahmeöffnung (108) des ersten Strömungsgehäuseteils (40) in die zweite Aufnahmeöffnung (104) des zweiten Strömungsgehäuseteils (42) erstreckt.

10. Vorrichtung zur Messung von Durchflussvorgängen von Fluiden nach einem der Ansprüche 7 bis 9,
**dadurch gekennzeichnet, dass**
das mindestens eine Wärmerohr (98, 100) sich parallel zur Platine (96) erstreckt.

11. Vorrichtung zur Messung von Durchflussvorgängen von Fluiden nach einem der vorhergehenden Ansprüche,
**dadurch gekennzeichnet, dass**
an einer ersten Seite des ersten Strömungsgehäuseteils (40) ein Kühlmitteleinlass (46) und ein Kühlmittelauslass (48) des Kühlkanals (50) ausgebildet sind, die in einen Einlasskanalabschnitt (52) und einen Auslasskanalabschnitt (66) münden, die sich jeweils vom Kühlmitteleinlass (46) und vom Kühlmittelauslass (48) in Richtung der gegenüberliegenden Seite des ersten Strömungsgehäuseteils (40) erstrecken und über zumindest einen Querkanalabschnitt (54, 64) mit einander verbunden sind.

12. Vorrichtung zur Messung von Durchflussvorgängen von Fluiden nach Anspruch 11,
**dadurch gekennzeichnet, dass**
sich ein erster Querkanalabschnitt (54) vom Einlasskanalabschnitt (52) zum die Verdrängerkammer (60) umgebenden Abschnitt (58) des Kühlkanals (50) erstreckt und der die Verdrängerkammer (60) umgebende Abschnitt (58) des Kühlkanals (50) sich bis in einen zweiten Querkanalabschnitt (64) erstreckt, der im Auslasskanalabschnitt (66) mündet.

13. Vorrichtung zur Messung von Durchflussvorgängen von Fluiden nach einem der vorhergehenden Ansprüche,
**dadurch gekennzeichnet, dass**
die durch den Kühlkanal (50) strömende Kühlmittelmenge regelbar ist.

## Claims

1. Device for measuring throughflow processes of fluids having
an inlet (10),
an outlet (12),
a flow housing (38) in which the fluid flows,
a drivable displacement meter (16) arranged in the flow housing (38)
a bypass line (20) via which the displacement meter (16) can be bypassed,
a pressure difference transducer (22), which is arranged in the bypass line (20) and is arranged in the flow housing (38)
and an evaluation and control unit (32) by means of which the drivable displacement meter (16) can be controlled as a function of the pressure difference applied to the pressure difference sensor (22), **characterized in that**
a cooling channel (50) through which coolant can flow is configured in the flow housing (38), a section (58) of which extends around a displacement chamber (60) of the displacement meter (16), which is formed as a groove (61) on a surface of the flow housing (38) facing a drive unit (18) and is closed by the drive unit (18).

2. Device for measuring throughflow processes of fluids according to claim 1,
**characterized in that**
the device comprises at least one heat pipe (88, 98, 100) via which heat from heat-generating components (32, 84, 86, 96) of the device can be transferred to the coolant flowing through the cooling channel (50).

3. Device for measuring throughflow processes of fluids according to claim 1 or 2,
**characterized in that**
the drive unit (18) comprises a housing (72) of a magnetic clutch (73) or an electric motor (80), via which the groove (61) is closed.

4. Device for measuring throughflow processes of fluids according to one of the preceding claims 2 or 3,
**characterized in that**
a heat pipe (88) extends along the drive unit (18) to the flow housing (38).

5. Device for measuring throughflow processes of fluids according to claim 4,
**characterized in that**
the heat pipe (88) extends at least along the stator (84) of the electric motor (80) and along a control board (86).

6. Device for measuring throughflow processes of fluids according to one of claims 4 or 5,
**characterized in that**
the flow housing (38) comprises a receiving opening (90) into which the heat pipe (88) protrudes.

7. Device for measuring throughflow processes of fluids according to one of the preceding claims 2 to 6,
**characterized in that**
at least one heat pipe (98) extends from a first flow housing part (40) of the flow housing (38), in which the displacement meter (16) is arranged, to a circuit board (96) with a sensor (28) for the detection of the position of the pressure difference transducer (22).

8. Device for measuring throughflow processes of fluids according to claim 7,
**characterized in that**
the circuit board (96) is arranged in a second flow housing part (42) of the flow housing (38), in which the pressure difference transducer (22) is accommodated and which is fastened to the first flow housing part (40).

9. Device for measuring throughflow processes of fluids according to claim 8,
**characterized in that**
the first flow housing part (40) and the second flow housing part (42) each comprise a first and a second receiving opening (102, 104, 106, 108), wherein a heat pipe (98) extends from the first receiving opening (106) of the first flow housing part (40) into the first receiving opening (102) of the second flow housing part (42) and a second heat pipe (100) extends from the second receiving opening (108) of the first flow housing part (40) into the second receiving opening (104) of the second flow housing part (42).

10. Device for measuring throughflow processes of fluids according to any one of claims 7 to 9,
**characterized in that**
the at least one heat pipe (98, 100) extends in parallel with the circuit board (96).

11. Device for measuring throughflow processes of fluids according to one of the preceding claims,
**characterized in that**
a coolant inlet (46) and a coolant outlet (48) of the cooling channel (50) are configured at a first side of the first flow housing part (40), which coolant inlet (46) and coolant outlet (48) open into an inlet channel section (52) and an outlet channel section (66), which extend from the coolant inlet (46) and the coolant outlet (48), respectively, towards the opposite side of the first flow housing part (40) and are connected to each other via at least one transversal channel section (54, 64).

12. Device for measuring throughflow processes of fluids according to claim 11,
**characterized in that**
a first transversal channel section (54) extends from the inlet channel section (52) to the section (58) of the cooling channel (50) surrounding the displacement chamber (60), and the section (58) of the cooling channel (50) surrounding the displacement chamber (60) extends into a second transversal channel section (64) which opens into the outlet channel section (66).

13. Device for measuring throughflow processes of fluids according to one of the preceding claims,
**characterized in that**
the quantity of coolant flowing through the cooling channel (50) is controllable.

## Revendications

1. Dispositif de mesure des processus d'écoulement de fluides, comportant
une entrée (10),
une sortie (12),
un boîtier d'écoulement (38) dans lequel circule le fluide,
un compteur volumétrique (16) pouvant être commandé, disposé dans le boîtier d'écoulement (38)
une conduite de dérivation (20) par laquelle le compteur volumétrique (16) peut être contourné,
un capteur de différence de pression (22), qui est disposé dans la conduite de dérivation (20) et qui est disposé dans le boîtier d'écoulement (38)
et une unité d'évaluation et de commande (32) au moyen de laquelle le compteur volumétrique (16) qui peut être piloté en fonction de la différence de pression appliquée au capteur de différence de pression (22),
**caractérisé en ce que**
un canal de refroidissement (50) dans lequel peut s'écouler du liquide de refroidissement est configuré dans le boîtier d'écoulement (38), dont une section (58) s'étend autour d'une chambre de déplacement (60) du compteur de déplacement (16), qui est formée comme une rainure (61) sur une surface du boîtier d'écoulement (38) tournée vers une unité d'entraînement (18) et est fermée par l'unité d'entraînement (18).

2. Dispositif de mesure des processus de passage des fluides selon la revendication 1,
**caractérisé en ce que**
le dispositif comprend au moins un conduit de chaleur (88, 98, 100) par lequel de la chaleur provenant de composants générateurs de chaleur (32, 84, 86, 96) du dispositif peut être transférée au fluide de refroidissement s'écoulant dans le canal de refroidissement (50).

3. Dispositif de mesure des processus de passage de fluides selon la revendication 1 ou 2,
**caractérisé en ce que**
l'unité d'entraînement (18) comprends un boîtier (72) d'un embrayage magnétique (73) ou d'un moteur électrique (80), par lequel la rainure (61) est fermée.

4. Dispositif de mesure des processus de passage de fluides selon l'une des revendications précédentes 2 ou 3,
**caractérisé en ce que**
un tube caloporteur (88) s'étend le long de l'unité d'entraînement (18) jusqu'au boîtier d'écoulement (38).

5. Dispositif de mesure de processus de passage de fluides selon la revendication 4,
**caractérisé en ce que**
le tube caloporteur (88) s'étend au moins le long du stator (84) du moteur électrique (80) et le long d'une carte de commande (86).

6. Dispositif de mesure des processus de passage de fluides selon l'une des revendications 4 ou 5,
**caractérisé en ce que**
le boîtier d'écoulement (38) comprend une ouverture de réception (90) dans laquelle le tube caloporteur (88) pénètre.

7. Dispositif de mesure de processus de passage de fluides selon l'une des revendications précédentes 2 à 6,
**caractérisé en ce que**
au moins un tube caloporteur (98) s'étend d'une première partie (40) du boîtier d'écoulement (38), dans laquelle est disposé le compteur de déplacement (16), vers une carte de circuit imprimé (96) avec un capteur (28) pour la détection de la position du transducteur de différence de pression (22).

8. Dispositif de mesure des processus de passage de fluides selon la revendication 7,
**caractérisé en ce que**
la carte de circuit imprimé (96) est disposée dans une deuxième partie de boîtier d'écoulement (42) du boîtier d'écoulement (38), dans laquelle est logé le transducteur de différence de pression (22) et qui est fixée à la première partie de boîtier d'écoulement (40).

9. Dispositif de mesure des processus de passage de fluides selon la revendication 8,
**caractérisé en ce que**
la première partie de boîtier d'écoulement (40) et la deuxième partie de boîtier d'écoulement (42) comprennent chacune une première et une deuxième ouverture de réception (102, 104, 106, 108), un tube caloporteur (98) s'étendant de la première ouverture de réception (106) de la première partie de boîtier d'écoulement (40) dans la première ouverture de réception (102) de la deuxième partie de boîtier d'écoulement (42) et un deuxième tube caloporteur (100) s'étendant de la deuxième ouverture de réception (108) de la première partie de boîtier d'écoulement (40) dans la deuxième ouverture de réception (104) de la deuxième partie de boîtier d'écoulement (42).

10. Dispositif de mesure des processus de passage de fluides selon l'une quelconque des revendications 7 à 9,
**caractérisé en ce que**
l'au moins un tube caloporteur (98, 100) s'étend parallèlement à la carte de circuit imprimé (96).

11. Dispositif de mesure de processus de passage de fluides selon l'une des revendications précédentes,
**caractérisé en ce que**
une entrée de fluide de refroidissement (46) et une sortie de fluide de refroidissement (48) du canal de refroidissement (50) sont configurées sur un premier côté de la première partie de boîtier d'écoulement (40), lesquelles entrée de fluide de refroidissement (46) et sortie de fluide de refroidissement (48) débouchent dans une section de canal d'entrée (52) et une section de canal de sortie (66), qui s'étendent de l'entrée de fluide de refroidissement (46) ou de la sortie de fluide de refroidissement (48) vers le côté opposé de la première partie de boîtier d'écoulement (40) et sont connectées l'une à l'autre par au moins une section de canal transversale (54, 64).

12. Dispositif de mesure des processus de passage de fluides selon la revendication 11,
**caractérisé en ce que**
une première section de canal transversal (54) s'étend de la section de canal d'entrée (52) à la section (58) du canal de refroidissement (50) entourant la chambre de déplacement (60), et la section (58) du canal de refroidissement (50) entourant la chambre de déplacement (60) se prolonge par une deuxième section de canal transversal (64) qui débouche dans la section de canal de sortie (66).

13. Dispositif de mesure des processus de passage de fluides selon l'une des revendications précédentes,
**caractérisé en ce que**
la quantité de fluide de refroidissement circulant dans le canal de refroidissement (50) est contrôlable.
